Europäisches Patentamt

(19) European Patent Office

Office européen des brevets

(11) Publication number: **0 458 480 A2**

(12) **EUROPEAN PATENT APPLICATION**

(21) Application number: 91303965.7

(22) Date of filing: 01.05.91

(51) Int. Cl.⁵: **F16C 1/10**

(30) Priority: 16.05.90 GB 9010710
14.12.90 GB 9027207

(43) Date of publication of application:
27.11.91 Bulletin 91/48

(84) Designated Contracting States:
DE ES FR IT

(71) Applicant: BRITAX (GECO) S.A.
88 Avenue de Fontainebleau
F-77981 Saint Fargeau Ponthierry (FR)

(72) Inventor: Zychowicz, Richard
431 Residence de la Provence
F-77190 Dammarie les Lys (FR)

(74) Representative: Hollinghurst, Antony
Britax Limited Patent Department
Chichester West Sussex PO19 2AQ (GB)

(54) **Remote control system.**

(57) A tiltable member (12) is pivotally mounted on a support member (18). The tiltable member (12) is connected to an actuator by a plurality of control wires (80, 82, 84) which are axially movable in respective sheaths (74, 76, 78) so that the orientation of the tiltable member (12) can be adjusted by a remote actuator. An additional control wire (96) connects the actuator to clutch means (26-36) arranged to vary the friction between the tiltable member (12) and the support member (18, 140).

EP 0 458 480 A2

Fig.1

This invention relates to a remote control system for adjusting the orientation of a tiltable member which is pivotally mounted on a support member, the tiltable member being connected to an actuator by a plurality of control wires which are axially movable in respective sheaths. A system of this type, applied to the control of the orientation of a rear view mirror for a motor vehicle is disclosed in US-A-3533303.

In known systems of this type, it is usual to provide sufficient friction within the mechanism to prevent inadvertent movement of the tiltable member. If such friction was provided at the pivotal mounting, there would be a tendency for small movements of the actuator to cause compression of some of the control wires and stretching of the others, until the static friction at the pivotal mounting had been overcome. This would result in jerky movement of the pivotally movable member. For this reason, it has been customary to minimise friction at the pivotal mounting of the pivotally movable member and provide the necessary friction at the actuator. In order to reliably hold the pivotally movable member in its set position, all the control wires are held under substantial permanent tension (usually applied by a spring). When mechanisms of this type are used for controlling the orientation of exterior rear view mirrors for vehicles, the tension must be sufficient to prevent noticeable vibration of the mirror. This increases the friction between the cables and their sheaths, particularly at bends, and has the result of limiting both the maximum acceptable length of the cables and the maximum number of bends. Consequently, when a mechanism of this type is used to control the orientation of an exterior rear view mirror which is mounted on the opposite side of the vehicle to the driver, the actuator cannot be positioned at a location readily accessible to the driver. The present invention aims to provide a remote control system of this type in which the permanent tension applied to the control wires can be reduced.

According to the invention, a remote control system of the foregoing type further comprises an additional control wire connecting the actuator to clutch means arranged to vary the friction between the tiltable member and the support member.

When the tiltable member is mounted on the support member by a central pivot joint, one of said members may have a convex formation symmetrically disposed with respect to said pivot joint, the other of said members carrying a plurality of segments surrounding said convex formation.

The additional control wire may itself extend round the exterior of the segments so that tension in the additional control wire urges the segments into engagement with the convex formation.

Alternatively, a spring steel clip may surround the segments to cause radial displacement thereof. Either the spring clip is arranged to urge the segments into engagement with the convex formation in which case increased tension in the additional control wire is arranged to cause disengagement of the clutch, or the spring clip is arranged to urge the segments out of engagement with the convex formation in which case increased tension in the additional control wire is arranged to cause engagement of the clutch.

In either case, the convex formation may be of part-spherical shape. The segments may together comprise a concave formation shaped to conform to the convex formation.

The actuator may comprise a part-spherical convex member mounted in a part-spherical socket with a control lever projecting from the side thereof opposite to the socket, the additional control wire being attached to an axially movable member mounted for axial displacement relative to the control lever and resiliently biassed relative to the part-spherical convex member.

Embodiments of the invention will now be described, by way of example, with reference to the accompanying drawings, in which:

Figure 1 is a plan view of a first mechanism adapted to be mounted in a mirror housing for adjusting the orientation of a reflective member relative to the housing;

Figure 2 is a cross-sectional view taken on the line 2 - 2 in Figure 1;

Figure 3 is a cross-sectional view of an actuator for use with the mechanism shown in Figures 1 and 2, with the control wire for the clutch in its engaged position;

Figure 4 is a cross-sectional view, similar to Figure 3, but showing the control wire for the clutch in its disengaged position;

Figure 5 is a plan view, similar to Figure 1, of a second mechanism adapted to be mounted in a mirror housing;

Figure 6 is a side view of the mechanism shown in Figure 5;

Figure 7 is a cross-sectional view of an actuator for use with the mechanism shown in Figures 5 and 6, with the control wire for the clutch in its engaged position;

Figure 8 is a part elevational, part cross-sectional view taken on the line 8 - 8 in Figure 7;

Figure 9 is a plan view, similar to Figure 1, of a third mechanism adapted to be mounted in a mirror housing;

Figure 10 is a cross-sectional view taken on the line 10 - 10 in Figure 8;

Figure 11 is a cross-sectional view of an actuator for use with the mechanism shown in Figures 9 and 10, with the control wire for the clutch in its engaged position; and

Figure 12 is a cross-sectional view taken on the line 12 - 12 in Figure 11.

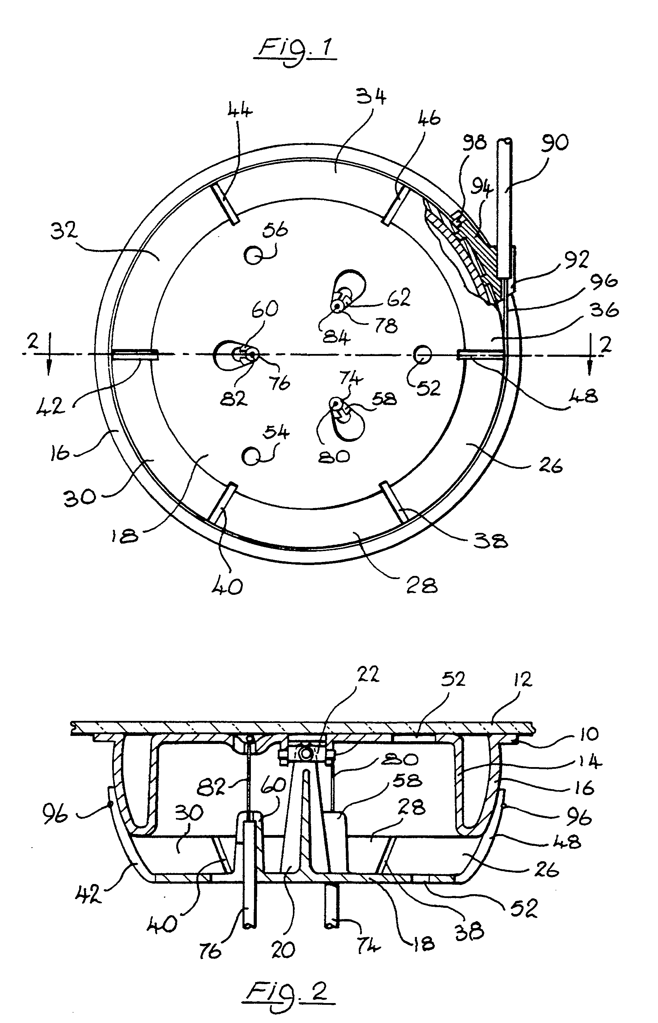

Referring to Figures 1 and 2, a mounting for the reflective member of a vehicle exterior mirror has a mirror carrier 10 with a reflective member 12 (not shown in Figure 1) mounted on one side. On its other side, the mirror carrier 10 has an annular projection 14 with a convex part-spherical outer surface 16.

A base member 18 is of generally circular shape and has a stem 20 extending perpendicularly from its centre. A gimbals bearing 22 couples the free end of the stem 20 to the mirror carrier 10 at the centre of the annular projection 14 so as to permit pivotal movement of the mirror carrier 10 relative to the base member 18 about two orthogonal axis in the plane of the reflective member 10 while preventing relative angular movement about a third axis perpendicular to the plane of the reflective member 10.

A flange, formed from six segments 26, 28, 30, 32, 34 and 36, separated by slots 38, 40, 42, 44, 46 and 48, projects from the periphery of the base member 18 to form a concave socket to serve as a clutch with the convex outer surface 16 of the annular projection 14 on the mirror carrier 10. The slots 38 to 48 permit limited radial flexing movement of the segments 26 to 36.

The base member 18 has three symmetrically located holes 52, 54 and 56, whereby it may be secured to the interior of a mirror housing (not shown). The base member 18 also has three sockets 58, 60 and 62, symmetrically spaced around the stem 20 for receiving the sheaths of three drive cables 74, 76 and 78. The drive wires 80, 82 and 84 of the drive cables 74, 76 and 78 have ferrules on their ends which engage in respective sockets, such as the socket 86 on the mirror carrier 10. The sockets 58, 60 and 62 on the base member 18 have slots in their side walls to permit passage of these ferrules during assembly.

In their relaxed state, the segments 26 to 36 are a loose sliding fit with the convex surface 16 of the annular projection 14 so that the mirror carrier 10 can pivot freely. In order to clamp the mirror carrier 10 in a set position, an additional cable 90 has its sheath received in a socket 92 formed in a link member 94 which is secured to the outer surface of the segment 36. The drive wire 96 of the cable 90 projects from the sheath 90 into a groove formed in the segments 26 to 36 round the entire periphery of the base member 18 and has its free end 98 secured to the link member 94. Thus, tension in the drive wire 96 presses the segments 26 to 36 into firm engagement with the convex surface 16 so as to clamp the mirror carrier 10 in a chosen position.

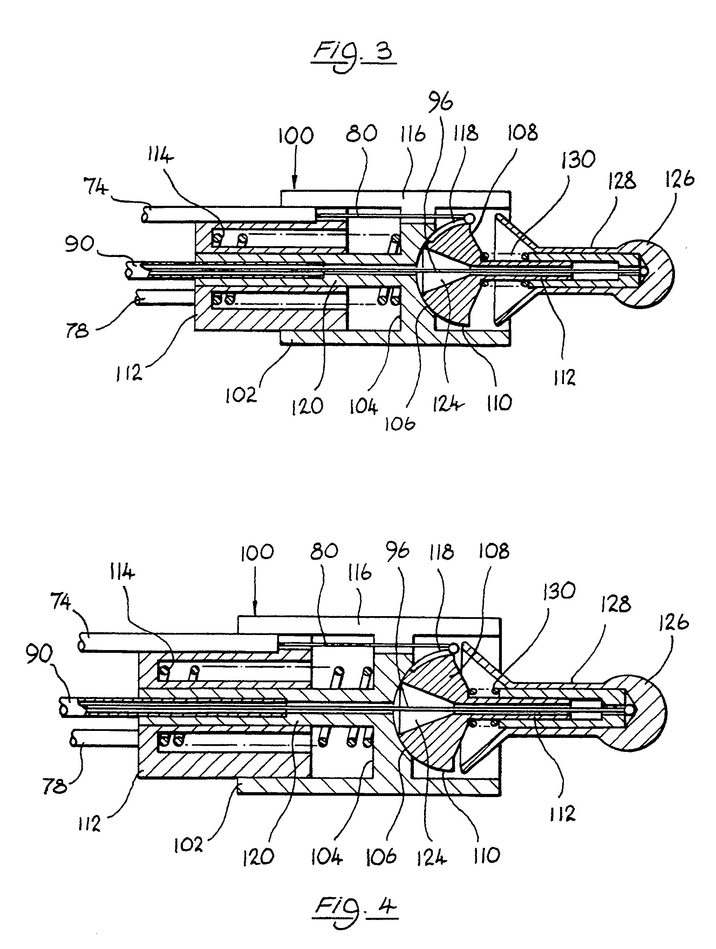

The other ends of the three drive cables 74, 76 and 78 and of the additional cable 90 are connected to an actuator 100 as shown in Figure 3. The actuator 100 has a hollow cylindrical body 102 divided into two chambers by a transverse wall 104 which has a part-spherical concave surface 106 on one side. An actuating member 108 has a part-spherical convex surface 110 engaging with the concave surface 106 and a lever 112 projecting from its opposite side.

The chamber of the actuator 100 opposite to the concave surface 106 contains a sliding member 112 which has three sockets for receiving the sheaths of the three drive cables, 74, 76 and 78 and which is biassed away from the actuating member 108 by a compression spring 114. The drive wire 80 of the drive cable 74 is led through a slot 116 which extends through the side wall 102 of the actuator 100 into the transverse wall 104. The end of the drive wire 80 is received in a groove 118 in the convex surface of the actuating member 108 and is secured to the periphery thereof, as can be seen in Figure 3. The ends of the other two drive wires 82 and 84 are similarly attached although this is not visible in the drawing. The compression spring 114 serves the dual purpose of maintaining a static tension in the three drive wires, 80, 82 and 84 and of holding the convex surface 110 of the actuating member 108 in engagement with the concave surface 106.

A stem 120 projects from the transverse wall 104 through a central bore 122 in the member 112. The sheath of the additional cable 90 is received in a socket formed in this stem 120, while the drive wire 96 thereof projects through a central bore in the stem 120, out through the concave surface 106 into a flared bore 124 in the actuating member 108 and thence through an axial bore in the lever 112. The end of the drive wire 96 is connected to a knob 126 formed integrally with a sleeve 128 which is slidable on the exterior of the lever 112 and biassed outwardly by a compression spring 130. The effect of the spring 130 is to maintain tension in the drive wire 96 of the additional cable 90 so as to maintain the segments 26 to 36 clamped against the convex surface 16 and thus to secure the mirror carrier 10 in its set position.

When the orientation of the mirror carrier 10 is to be adjusted, the knob 126 is pressed towards the body of the actuator 100 so as to relieve the tension in the drive wire 96 of the additional cable 90. The mirror carrier 10 is then free to pivot about the spherical member 22 on the stem 20 and its orientation can be adjusted by moving the knob 126 in the required direction, this movement being transmitted to the mirror carrier 10 by the three drive cables 74, 76 and 78. When the knob 126 is released, the spring 130 reestablishes tension in the drive wire 96 of the additional cable 90, thus clamping the mirror carrier 10 in its new position.

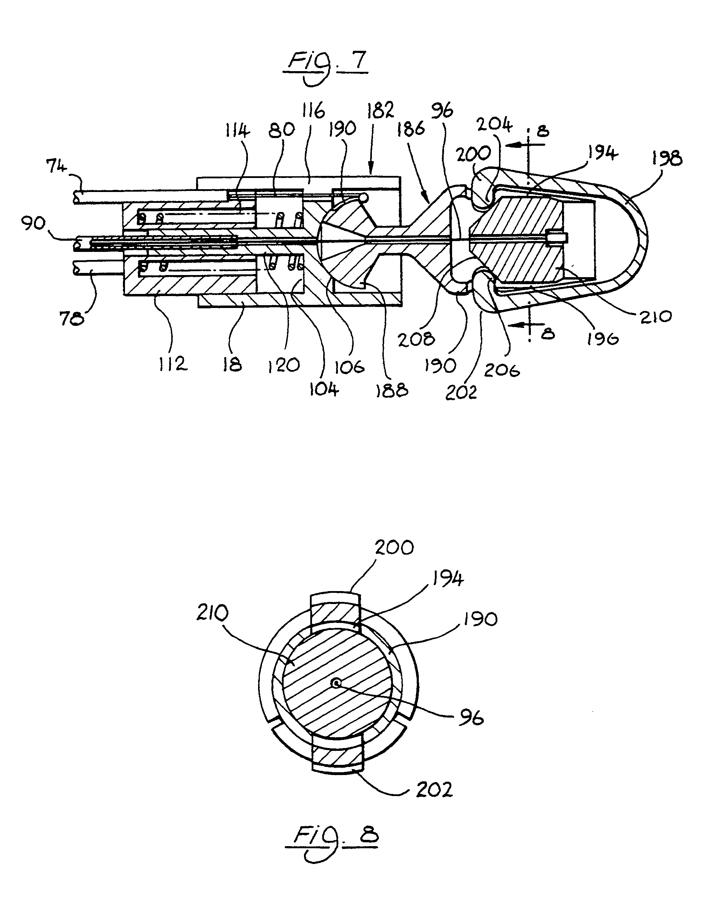

The embodiment of the invention illustrated in Figures 1 to 4 relies on the resilience of the segments 26 to 36 of the flange on the base member 18 to ensure reliable disengagement of the clutch when the tension in the fourth cable 90 is relieved. If the base member 18 is made of a plastics material, the segments 26 to 36 may take a permanent set over a period of time and no longer declutch reliably. Figures 5 to 8 illustrate an alternative embodiment of the invention in which a separate spring is provided to ensure reliable disengagement. In Figures 5 and 6, a mounting for the reflective member of a vehicle exterior mirror has a mirror carrier 10 which is identical with the correspondingly numbered component of Figures 1 and 2 and will not be described in detail. The mirror carrier 10 is supported on a base member 140 which is basically similar to the base member of Figures 1 and 2 in that it supports the mirror carrier on a central gimbles bearing (not shown) and in that it has a flange, formed from six segments 142, 144, 146, 148, 150 and 152 separated by slots 154, 156, 158, 160, 162 and 164.

The base member 140 differs from the base member 18 of Figures 1 and 2 in that each of the segments 142 to 152 has a pair of radially outwardly directed ribs 166. Each rib 166 has a groove 168 (Figure 6) in a surface which confronts the back of the mirror carrier 10. In all other respects, the base member 140 is identical to the base member 18 and its manner of connection to the three drive cables 74, 76 and 78 is the same.

A spring steel wire loop 170 extends round the free edges of the segments 142 to 152 of the base member 140 and is received in the grooves 168 of the ribs 166. The end portions 172 and 174 of the wire 170 overlap one another and then are bent radially outwardly and have their ends formed into hooks 176 and 178 which engage respectively with the sheath of the additional cable 90 and a ferrule 180 on the end of its drive wire 96. The wire loop 170 is set so that it normally clamps the segments 142 to 152 firmly against the convex surface 16 on the mirror carrier 10. Tension in the additional cable 90 draws the hooks 176 and 178 towards one another, relieving the force exerted by the wire loop 170 and thus freeing the mirror carrier 10 to pivot on its gimbles bearing.

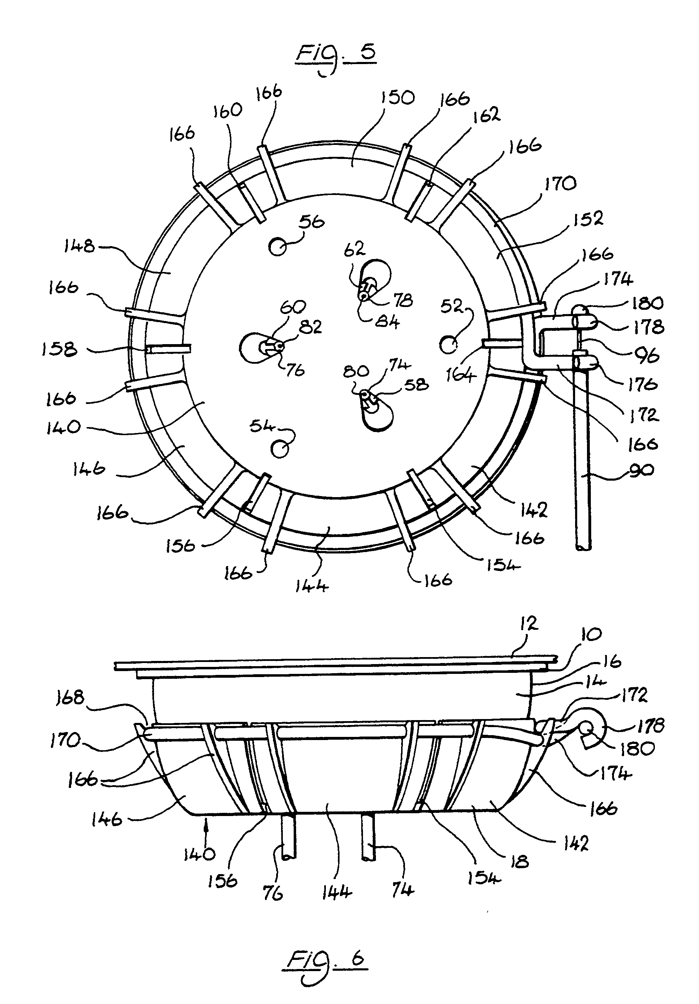

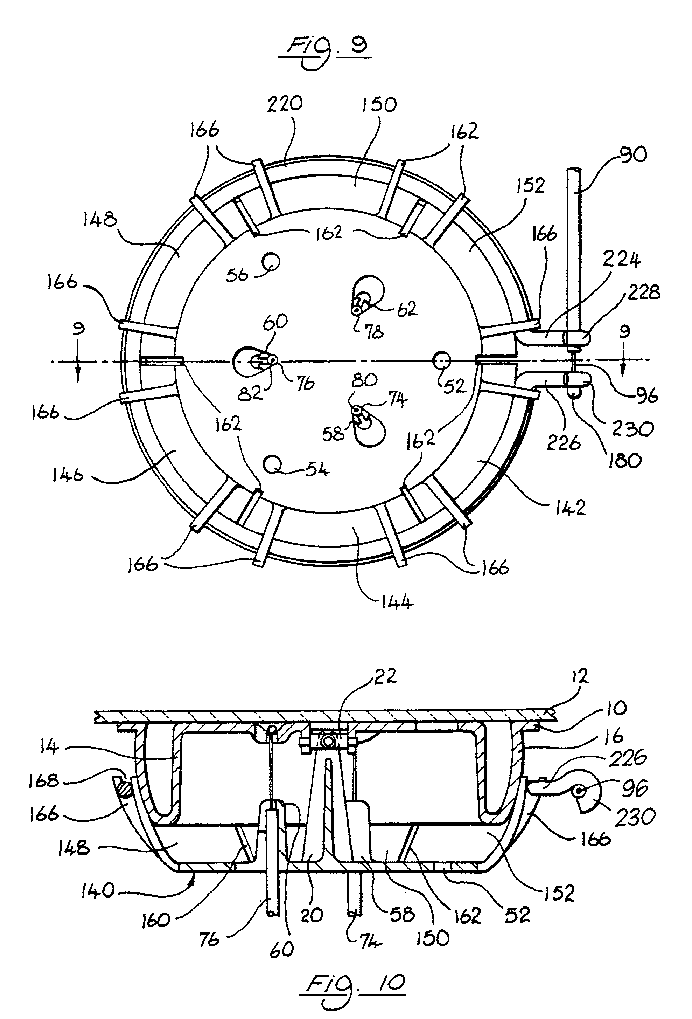

Figures 7 and 8 illustrate an actuator 182 for use with the mounting shown in Figures 5 and 6. The body 184 of the actuator 182 is identical with the body 102 of the actuator 100 shown in Figures 3 and 4. Corresponding parts are denoted by the same reference numerals and will not be described again in detail.

The actuator 182 also has an actuating member 186 which is similar to the actuating member 108 of Figures 3 and 4 in that it has a part to spherical convex surface 188 engaging with the concave surface 106 of the body and containing grooves such as the groove 190 for receiving the ends of the drive wires of the three drive cables 74, 76 and 78.

In place of the stem 120, the actuator 182 has a body with a hollow frusto-conical end portion 190 with two diametrically opposite slots 194 and 196 in its side walls. A cap 198 fits over the frusto-conical portion 190 and is secured by adhesive where it abuts. The cap 198 has two projecting limbs 200 and 202 each aligned with a respective slot 194, 196. The projections 200 and 202 have inwardly directed projections 204 and 206 which abut against a conical surface 208 on a ferrule 210 which is secured to the end of the drive wire 96 of the additional cable 90. The cap 198 is formed of a material which is sufficiently resilient to allow the limbs 200 and 202 to be squeezed together so as to force the ferrule 210 to the right, as viewed in Figure 7, thereby increasing the tension in the drive wire 96 and thus relieving the force exerted by the spring ring 170 (Figures 5 and 6).

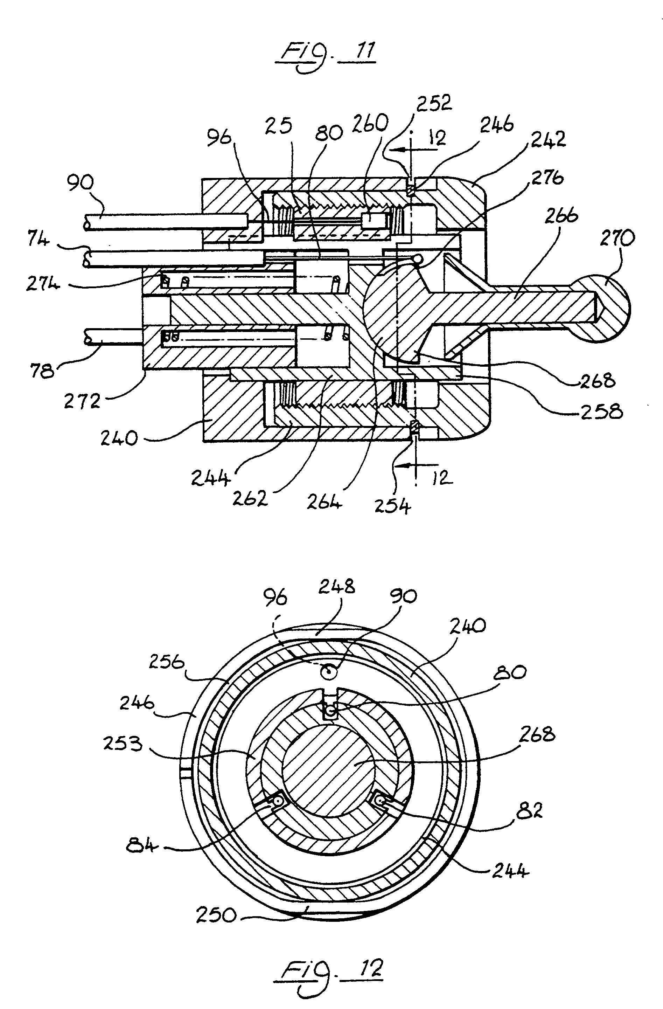

Figures 9 and 10 illustrate yet another form of mounting for the reflective mounting of a vehicle exterior mirror, in accordance with the invention. The mirror carrier 10 and base member 140 thereof are identical with the corresponding components illustrated in Figures 5 and 6. Equivalent parts are denoted with the same reference numerals and will not be described in detail. The difference is that the segments 142 to 152 are biased by a spring steel wire lop 220, the end portions 224 and 226 of which do not overlap one another. The loop 220 is set so that it normally urges the segments 142 to 152 out of engagement with the part-spherical surface 16 on the mirror carrier 10. The sheath of the additional cable 90 engages with a hook formation 228 on the end portion 224 of the ring while the ferrule 180 on the control wire 96 thereof engages with the corresponding hook formation 230 on the end portion 226. Increase in tension in the cable 90 pulls the ends 224 and 226 of the ring together, thus forcing the segments 142 to 152 into engagement with the part-spherical surface 16.

The mounting illustrated in Figures 9 and 10 may be controlled by the actuator illustrated in Figures 3 and 4. An alternative actuator (which may also be used with the mounting illustrated in Figures 1 and 2) is illustrated in Figures 11 and 12. A hollow cylindrical outer body 240 has a reduced diameter portion at its left-hand end (as viewed in Figure 11). A cylindrical control knob 242 abuts against the right-hand end of the outer body 240 and carries a hollow cylindrical flange 244 which is a sliding fit in the outer body 240. An annular ring clip 246, formed from spring steel wire, has two diametrically flattened portions 248 and 250 which are received in slots 252 and 254 in the outer body 240 and engage in a peripheral groove 256 in the outer surface of the flange 244. This allows the control knob 242 to rotate relative to the outer body 240 while preventing relative axial movement between them.

On its inner wall, the flange 244 has a female screw thread which engages with a male screw thread on a slider 256 which is received therein. The slider 256 is annular and is a sliding fit on an inner cylindrical body 258 which engages in the reduced diameter portion at the left-hand of the outer cylindrical body 240. Relative rotation between the slider 256, the inner cylindrical body 258 and the outer cylindrical body 240 is prevented by splines and keyways (not shown). The sheath of the additional wire 90 is received in the outer cylindrical body 240 and the control wire 96 thereof projects into the slider 256 which engages with a ferrule 260 on its free end. The effect of this is that rotation of the control knob 242 causes the slider 256 to be screwed inwardly or outwardly, thereby varying the tension in the additional cable 90 and thus causing engagement and disengagement of the segments 142 to 152 with the part-spherical surface 16 on the mirror carrier 10. The pitch of the screw threads on the flange 244 and the slider 256 is such that the control knob 242 remains in the position in which it is set.

The inner cylindrical body 258 is similar to the cylindrical body 102 of the actuator shown in Figures 3 and 4. It is divided into two chambers by a transverse wall 262 which has a part-spherical surface 264 on one side. An actuating member 266 has a part-spherical convex surface 268 engaging in the concave surface 264 and a lever 270 projecting from its opposite side. The chamber of the inner cylindrical body 258 opposite to the part-spherical concave surface 264 contains a sliding member 272 for receiving the sheaths of the three drive cables 74, 76 and 78 and is biassed away from the actuating member 266 by a compression spring 274. The drive wire 80 is received in a groove 276 in the convex surface 268 of the actuating member 266 and is secured to the periphery thereof. The ends of the other two drive wires 82 and 84 are similarly attached although this is not visible in Figure 11.

## Claims

1.  A remote control system for adjusting the orientation of a tiltable member (12) which is pivotally mounted on a support member (18, 140), the tiltable member (12) being connected to an actuator (100, 182, 240) by a plurality of control wires (80, 82, 84) which are axially movable in respective sheaths (74, 76, 78), characterised by an additional control wire (96) connecting the actuator (100, 182, 240) to clutch means (26-36, 142-152) arranged to vary the friction between the tiltable member (12) and the support member (18, 140).

2.  A remote control system according to claim 1, wherein the tiltable member (12) is mounted on the support member (18, 140) by a central pivot joint (22), one of said members has a convex formation (16) symmetrically disposed with respect to said pivot joint, and the other of said members carries a plurality of segments (26-36, 142-152) surrounding said convex formation (16).

3.  A remote control system according to claim 1 or 2, wherein the additional control wire (96) extends round the exterior of the segments (26-36) so that tension in the additional control wire (96) urges the segments (26-36) into engagement with the convex formation (16).

4.  A remote control system according to claim 1 or 2, wherein a spring steel clip (170, 220) surrounds the segments (142-152) to cause radial displacement thereof.

5.  A remote control system according to claim 4, wherein the spring clip (170) is arranged to urge the segments (142-152) into engagement with the convex formation, increased tension in the additional control wire (96) being arranged to cause disengagement of the clutch.

6.  A remote control system according to claim 4, wherein the spring clip (170) is arranged to urge the segments (142-152) out of engagement with the convex formation (16), increased tension in the additional control wire (96) being arranged to cause engagement of the clutch.

7.  A remote control system according to any preceding claim, wherein the convex formation (16) is of part-spherical shape.

8.  A remote control system according to any preceding claim, wherein the segments (26-36, 142-152) together comprise a concave formation shaped to conform to the convex formation (16).

9.  A remote control system according to any preceding claim, wherein the actuator (100, 182, 240) comprises a part-spherical convex member (108, 186, 266) mounted in a part-spherical socket (106, 264) with a control lever (112, 198, 266) projecting from the side thereof opposite to the socket (106, 264), the additional control wire (96) being attached to an axially movable member (126, 210, 256) mounted for axial displacement relative to the control lever (112, 198, 266) and resiliently biassed relative to the part-spherical convex member (108, 186, 266).

10. A remote control system according to claim 9, wherein the axially movable member (126, 210) is mounted for pivotal movement with the control lever (112, 198).

11. A remote control system according to claim 9, wherein the axially movable member (256) is mounted for sliding movement relative to the socket (264).

## Fig.1

## Fig.2

_Fig. 3_

_Fig. 4_

Fig. 5

Fig. 6

Fig. 7

Fig. 8

*Fig. 9*

*Fig. 10*

_Fig. 11_

_Fig. 12_